# EUROPÄISCHE PATENTANMELDUNG

(11) **EP 1 320 083 A1**
(43) Veröffentlichungstag der Anmeldung: **18.06.2003**
(21) Anmeldenummer: 01129746.2
(22) Anmeldetag: 13.12.2001
(51) Int. Cl.: G09C 1/02, G07C 9/00

(54) **Authentifikation durch Eingabe von strukturierten Wortfolgen**

(71) Anmelder: SIEMENS AKTIENGESELLSCHAFT, 80333 München (DE)
(72) Erfinder: Kunstmann, Niels, Dr., 85540 Haar (DE)

(57) **Zusammenfassung**

Die Erfindung betrifft ein Verfahren zur Authentifikation unter Verwendung einer PIN bei dem jeder Ziffer der PIN mindestens ein Wort zugeordnet ist, wobei die aufeinanderfolgenden Worte einen strukturierten Satz ergeben, und bei dem dieser Satz über eine Spracherkennungseinrichtung ausgewertet wird.

## Beschreibung

Die Erfindung betrifft ein Verfahren zur Authentifikation unter Verwendung einer PIN (persönliche Identifikationsnummer).

Solche Verfahren sind insbesondere bei Mobilfunkgeräten sowie beim bargeldlosen Zahlungsverkehr und auch bei der Zugangskontrolle von Computern und Gebäuden allgemein bekannt.

So ist an vielen Stellen zur Absicherung eines Zugangs oder zur Absicherung einer Transaktion die manuelle Eingabe einer PIN (Persönliche Identifikations-Nummer) erforderlich. Es ist zu beobachten, dass die Anzahl von PINs noch im Ansteigen begriffen ist. Aus Sicherheitsgründen wird empfohlen, diese PINs nicht niederzuschreiben oder eine entsprechende Niederschrift zumindest sorgfältig zu verwahren. Somit besteht das Problem, sich viele unterschiedliche PINs zu merken.

Bei einigen Geräten, beispielsweise Handys, ist es für den Benutzer möglich die PINs zu ändern. Dies impliziert jedoch einige Nachteile. Für fremde Personen ist etwa eine über eine sogenannte Eselsbrücke zu merkende PIN, wenn man etwa 4711 oder das eigene Geburtsdatum wählt, recht leicht herauszufinden. Andererseits muss gewährleistet sein, dass die geänderte PIN nicht im Gerät ausgespäht werden kann.

Es gibt unterschiedliche Merkhilfen für Zeichenketten, von denen einige vorgestellt werden.

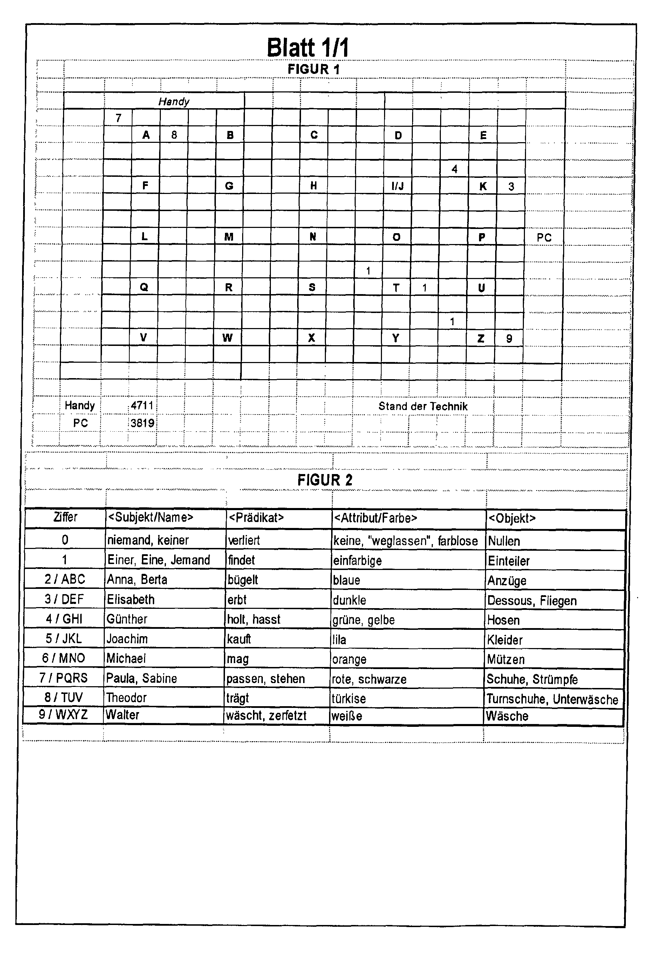

Als Werbemaßnahme wurden von einigen Firmen bereits Karten mit etwa dem folgenden Aussehen verteilt, mit denen man bis zu 8 PINs auf relativ sichere Weise aufschreiben kann, ohne dass sie auf einfache Weise herauszufinden sind. Die bereits vorgedruckten Felder sind in der Figur 1 fett markiert.

Der Gebrauch der Karte ist wie folgt. Der Benutzer überlegt sich ein Schlüsselwort, im Beispiel nehmen wir für ein Handy das Wort "Katze". Nun entspricht jedem der ersten 4 Buchstaben dieses Wortes eine Zahl der zu merkenden PIN mit der Ziffernfolge 4-7-1-1. Der Benutzer trägt nun das Stichwort "Handy" in eins der 9 äußeren Felder ein, in unserem Beispiel links oben. Nun werden die Ziffern 4-7-1-1 in diejenigen Kästchen geschrieben die links oben neben den Buchstaben K-at-z stehen. Ebenso können andere PINs für die Kreditkarten etc. auf der Karte aufgeschrieben werden. Als weiteres Beispiel wurde die PIN mit der Ziffernfolge 3-8-1-9 für einen PC gewählt. Die zugehörigen Ziffern werden, wie das Wort "PC" in die rechten Felder geschrieben. Schließlich füllt der Benutzer alle noch offenen Felder mit beliebigen Ziffern auf. So kann er anhand eines einzigen Schlüsselwortes seine sämtlichen PINs reproduzieren und sie den entsprechenden Geräten oder Karten zuweisen. Für einen Fremden ist die Karte aber ohne Kenntnis dieses Schlüsselwortes wertlos.

Andere Merkhilfen für Telefonnummern sind die sogenannten "vanity-Nummern". Hierbei wird ausgenutzt, dass einem Wort wie z.B. "Telekom" über die Zehnertastatur eines Telefons eine Nummer, im Beispiel 8-3-5-3-5-6-6, eindeutig zugeordnet wird. Soll für einen Teilnehmer eine neue frei zu wählende Nummer vergeben werden, so kann dieser einen Begriff vorgeben, aus dem sich dann über die Tastaturbelegung die zugehörige Telefonnummer ergibt. Somit kann man sich die Nummer besser merken. Ein Nachteil hier ist allerdings, dass das Verfahren nur für neu zu vergebende Ziffernketten gangbar ist. Diese Ziffernketten können außerdem nicht die Ziffern "0" und "1" enthalten.

Der Erfindung liegt die Aufgabe zugrunde, ein Verfahren zur Authentifikation unter Verwendung einer PIN anzugeben, bei dem die PIN leichter merkbar ist.

Diese Aufgabe wird erfindungsgemäß durch die im Patentanspruch 1 angegebenen Merkmale gelöst.

Das erfindungsgemäße Verfahren ermöglicht die Authentifikation durch die Eingabe von Sätzen beziehungsweise Phrasen. Dabei kommt statt der Eingabe von Ziffern über eine Tastatur am Gerät die Spracherkennung zu Einsatz. Gerade bei Handys wird die Rechnerleistung immer größer und es ist zu erwarten, dass zumindest eine einfache Spracherkennung in Zukunft in jedem der Geräte vorhanden sein wird.

Im folgenden wird die Erfindung anhand eines in der Zeichnung dargestellten Ausführungsbeispieles beschrieben. Dabei zeigen:
Figur 1 eine Merkhilfe für die PIN gemäß dem Stand der Technik, und
Figur 2 die Merkhilfe für die erfindungsgemäß konzipierte PIN.

Das erfindungsgemäße Verfahren geht von der Eingabe einer PIN aus. Dabei werden keine Ziffernfolgen eingegeben oder eine Buchstabenerkennung verwendet, sondern es wird eine Spracherkennung bestimmter Phrasen eingesetzt.

Erfindungsgemäß erfolgt die Eingabe der PIN durch das Aufsprechen eines Satzes mit vorgegebener Struktur. Dabei geben die Anfangsbuchstaben der Worte beispielsweise die durch die Standardisierung der am Telefon verwendeten Tastatur vorgegebene zugehörige Zifferntaste beziehungsweise Ziffer an.

Das Vorgehen wird anhand von Figur 2 erläutert. Die möglichen Sätze sind syntaktisch aufgebaut als Folge:
<Subjekt/Name><Prädikat><Attribut/Eigenschaft><Objekt>.

Durch diese feste Strukturierung kann ein Vertauschen von Ziffern ausgeschlossen werden. Die Figur 2 zeigt, wie eine Kodierung von Ziffern durch Worte aussehen könnte. Eine besondere Herausforderung bleibt dabei, Entsprechungen für die Ziffern 0 und 1 zu finden, denen auf der Tastatur keine Buchstaben zugeordnet sind. Hierfür sind gangbare Möglichkeiten aufgezeigt, diese durch bestimmte Worte zu repräsentieren, die auf einfache Weise mit den Ziffern 0 oder 1 assoziierbar sind.

Der PIN mit der Ziffernfolge 4-7-1-1 würde also der Satz "Günther passen einfarbige Einteiler" entsprechen, der als Merkhilfe für die Ziffernfolge dient. Man kommt im Beispiel mit weit unter 100 unterschiedlichen Wörtern im Vokabular des Erkenners aus. Weiterhin kann eine Wortfolgenmodellierung beispielsweise durch Bigramm-Sprachmodelle erfolgen, so dass die Aufgabe für den Spracherkenner einfacher wird.

Durch die im speziellen Beispiel gewählten konkreten Gegen stände als Subjekt und Objekt des Satzes lässt sich mit der PIN nun ein konkret vorstellbares Bild verbinden, was das Erinnern erleichtert.

Es sei darauf hingewiesen, dass dasselbe Verfahren beruhend auf Einzelworten, deren Buchstabenfolge der Ziffernfolge entspricht, aus mehreren Gründen nicht gangbar ist. Zwar könnte man mittels des bereits in vielen Handys implementierten T9-Algorithmus leicht für eine Ziffernfolge ein Merkwort ermitteln, doch fehlen die Ziffern 0 und 1. Weiterhin müsste zur Spracherkennung der Wortschatz weitaus größer sein, was die Erkennungsaufgabe recht anspruchsvoll werden lässt.

Speziell bei Handys, bei denen die PIN auf der SIM-Karte gespeichert ist, und frei gewählt werden kann, gibt es noch eine weitere Einsatzmöglichkeit. Der Benutzer kann hier den zu verwendenden Satz selbst wählen. Die Zuordnung zur PIN geschieht im Gerät. In diesem Fall kann das Vokabular so eingeschränkt werden, dass die problembehafteten Ziffern 0 und 1 nicht vorkommen.

Eine einfache Anwendung ist das Ersetzen der PIN-Eingabe beim Einschalten eines Handys durch Spracheingabe. Diese PIN ist für den Benutzer frei wählbar. Es ist ohne weiteres möglich im Endgerät eine Worttabelle in der oben vorgestellten Art vorzuhalten. In Zukunft wird ein einfacher Spracherkenner für ein Vokabular mit 100 Worten und einem einfachen Wortfolgenmodell ohne Problem ins Endgerät integrierbar sein.

Der Benutzer möchte nun einen Merksatz vergeben, um die PIN zu ersetzen. Hierzu wird im Handy die entsprechende Funktionalität aufgerufen. Der Benutzer erhält nun die Möglichkeit, sich aus den angebotenen Worten für die einzelnen Ziffern der Reihe nach die gewünschten zu wählen. Zunächst steht als für das erste Wort, also die ersten Ziffern, eine wie oben vorgestellte Namensliste zur Verfügung. Anschließend wird dem Benutzer eine Auswahl von Prädikaten angeboten. Es folgen das Attribut und das Objekt. Zuletzt lässt sich der Benutzer den gewählten Satz noch einmal zeigen und das Gerät ermittelt die zugehörige PIN, die ebenfalls angezeigt wird. Der gewählte Satz kann dann statt der manuellen Eingabe der PIN beim Einschalten des Handys aufgesprochen werden. Natürlich dient der Satz auch ohne Spracheingabe als einfache Merkhilfe.

Bei einer entsprechend grossen Anzeigeeinrichtung kann zur Auswahl der PIN auch die in Figur 2 dargestellte Tabelle angezeigt werden, so dass die Auswahl des vollständigen Merksatzes beispielsweise durch aufeinanderfolgendes Anklicken der einzelnen Worte erfolgen kann.

Falls in einer anderen Anwendung die PIN nicht frei wählbar ist, kann man dem Benutzer zumindest diejenigen Worte jeweils zur Auswahl vorstellen, deren Anfangsbuchstaben der betreffenden Ziffer entsprechen, vielleicht fällt es einem Benutzer leichter, sich statt "Paula wäscht schwarze Fliegen" etwa den Satz "Sabine zerfetzt rote Dessous" zu merken, was beides der PIN 7-9-7-3 entspricht.

Das oben dargestellte Verfahren kann auch auf einfache Weise um eine zusätzliche Sicherheitskomponente ergänzt werden, wenn die gewählte Wortfolge zur Sprecherverifikation genutzt wird. Dann müsste der ausgewählte Beispielsatz vom Benutzer noch einmal durch Aufsprechen als Referenz für die Sprecherverifikation hinterlegt werden.

## Patentansprüche

1. Verfahren zur Authentifikation unter Verwendung einer PIN bei dem jeder Ziffer der PIN mindestens ein Wort zugeordnet ist, wobei die aufeinanderfolgenden Worte einen strukturierten Satz ergeben, und
bei dem dieser Satz über eine Spracherkennungseinrichtung ausgewertet wird.

2. Verfahren gemäß Anspruch 1
bei dem zusätzlich eine Sprecherverifikation erfolgt.

3. Verfahren nach Anspruch 1 oder 2,
bei dem zur Auswahl der PIN zumindest die einzelnen Worte angeboten werden.
